# Europäisches Patentamt

# European Patent Office

# Office européen des brevets

(19)

(11) Veröffentlichungsnummer: **0 072 519**

**A1**

(12) **EUROPÄISCHE PATENTANMELDUNG**

(21) Anmeldenummer: 82107191.7

(22) Anmeldetag: 09.08.82

(51) Int. Cl.³: **A 01 G 9/22**

(30) Priorität: 14.08.81 CH 5243/81

(43) Veröffentlichungstag der Anmeldung:
23.02.83 Patentblatt 83/8

(84) Benannte Vertragsstaaten:
AT BE CH DE FR GB IT LI LU NL SE

(71) Anmelder: Lippuner, Hans
Grünaustrasse 17
9470 Buchs/SG(CH)

(72) Erfinder: Lippuner, Hans
Grünaustrasse 17
9470 Buchs/SG(CH)

(74) Vertreter: Riederer, Conrad A., Dr.
Bahnhofstrasse 10
CH-7310 Bad Ragaz(CH)

(54) Einrichtung zur Veränderung der Wärme- und/oder Lichtdämmung bei Bauten, insbesondere Gewächshäusern.

(57) Zur Erhöhung der Wärmedämmmung werden bei einem Gewächshaus in den Zwischenraum (21) zwischen den Scheiben (17, 19) Kugeln aus Schaumkunststoff gefördert. Die Förderung erfolgt pneumatisch durch einen Ventilator (23). Das Fördermedium fliesst über die Leitung (25) in den Hohlraum (21). Die Siebklappe (39) lässt jedoch nur die Luft durch die Rückluftleitung (43) zum Tank (45) zurückfliessen. Diese Luft fördert dann weiter Kunststoffkugeln über die Klappe (49) zum Transportventilator (23). Es besteht ein geschlossener Kreislauf. Durch Oeffnen der Siebklappe (39) und Schliessen der Klappe (49) werden die Kunststoffkugeln wieder in den Tank (45) zurückbefördert. Dies erlaubt es tagsüber den Sonnenschein auszunutzen und nachts eine Abstrahlung der Wärme weitgehend zu verhindern. Im Sommer wird auch die Wärmeeinstrahlung herabgesetzt.

EP 0 072 519 A1

Einrichtung zur Veränderung der Wärme- und/oder
Lichtdämmung bei Bauten, insbesondere Gewächshäusern

Die Erfindung betrifft eine Einrichtung zur Veränderung der
Wärme- und/oder Lichtdämmung bei Bauten, insbesondere Gewächshäusern, bei welchen Bauten mindestens ein Teil der
Bauelemente, z.B. mehrfachverglaste Scheiben, einen Hohlraum
aufweisen.

Es ist bekannt, dass Gewächshäuser mit grossen Glasflächen
sehr hohe Wärmeverluste haben, der durch Heizung ersetzt
werden muss. Der stündliche Wärmebedarf in kcal/Std. beträgt
pro Quadratmeter Glas 6,5 mal die Differenz zwischen Innentemperatur und Aussentemperatur. Dieser hohe k-Wert von
6,5 hat einfachverglaste Gewächshäuser praktisch unwirtschaftlich gemacht. Neue Gewächshäuser werden daher meist
in Doppelverglasung ausgeführt. Doppelverglasung besitzt
jedoch immer noch einen relativ hohen k-Wert von etwa 3,5.

Bei Sonnenschein haben die Glasflächen des Gewächshauses den
Vorteil, dass sie als Sonnenkollektoren wirken. Sie lassen
nicht nur die Lichtstrahlung sondern auch die Wärmestrahlung
herein, so dass an schönen Tagen auch ohne Heizung die Innentemperatur des Gewächshauses grösser ist als die Aussentemperatur. Dies ist im Winter und in der Uebergangzeit erwünscht, weil dadurch Heizmaterial gespart werden kann. Im Sommer hingegen bringt diese Wärmeentwicklung im Gewächshaus Probleme, weil unerwünscht hohe Temperaturen entstehen können. Die Gewächshäuser sehen daher eine sogenannte Schattierung vor, die meist durch Rolladen oder Lamellenstoren gebildet wird. Es ist auch bekannt zur Schattigung die Fenster mit einer Spezialfarbe anzustreichen, die im Herbst wieder abgewaschen werden muss.

Eng im Zusammenhang mit der Schattierung steht die Lüftung des Gewächshauses. Bei grosser Hitze hat die Lüftungsvorrichtung die Aufgabe, die Innentemperatur des Gewächshauses in erträglichen Grenzen zu halten. Je intensiver daher die sommerliche Sonneneinstrahlung im Gewächshaus ist, desto wirksamer muss auch die Lüftung sein. Die wirksamste Lüftung ist die sogenannte Firstlüftung, bei welcher die Warmluft das Gewächshaus entlang des Firstes verlassen kann. In der Praxis hat jedoch die Firstlüftung den Nachteil von grossen Wärmeverlusten im Winter, weil es praktisch unmöglich ist, eine absolut dichte Firstlüftung zu bauen.

Es ist daher Aufgabe der vorliegenden Erfindung, eine Einrichtung zur Veränderung der Wärme- und/oder Lichtdämmung zu schaffen, die sich insbesondere für doppelverglaste Gewächshäuser eignet, um dort im Winter die Wärmeverluste zu reduzieren und im Sommer die Wärmeeinstrahlung zu mindern.

Gemäss der Erfindung wird dies dadurch erreicht, dass Mittel vorgesehen sind, um einen körnigen Füllstoff aus einem Speicher in den Hohlraum des jeweiligen Bauelementes, also der doppelverglasten Scheibe, einzubringen bzw. aus diesem wieder in den Speicher zurückzuführen.

Befindet sich Füllstoff im Hohlraum zwischen zwei Scheiben, so wird durch diesen Füllstoff eine Wärmeübertragung von einer Scheibe zur andern durch Konvektionsströme stark vermindert. Wenn der Füllstoff selbst aus einem wärmedämmenden Material, z.B. geschäumtem Kunststoff, besteht, werden besonders günstige k-Werte erreicht. Je nach der Art des verwendeten Füllstoffes erfolgt auch eine Lichtdämmung. Werden beispielsweise Körner aus weissem Kunststoffschaum verwendet, so wird durch die weisse Farbe viel einfallendes Licht reflektiert. Trotzdem kann noch diffuses Licht durchdringen, so dass eine Beleuchtung immer noch gewährleistet ist. Dies ermöglicht es, im Sommer auch eine Lichtdämmung zu bewirken, wobei vor allem der Durchtritt der langwelligen Wärmestrahlen stark reduziert wird. Damit kann auch im Sommer die Temperatur im Gewächshaus relativ tief gehalten werden, ohne dass eine besonders effektive Lüftung notwendig ist. Die Einrichtung hat also den Vorteil, dass nicht nur im Winter Energie gespart werden kann sondern dass im Sommer keine zusätzliche Schattierungseinrichtung notwendig ist und dass auch keine besonders effektive Lüftung, z.B. eine Firstlüftung mit all ihren Nachteilen, notwendig ist. Kann aber auf eine Firstlüftung verzichtet werden, so bringt dies im Winter weitere Heizkostenersparnisse, weil dann auch die mit einer Firstlüftung üblicherweise anfallenden Wärmeverluste durch undichte Stellen im Firstbereich wegfallen.

Wenn es auch möglich ist, als Transportmittel für den körnigen Füllstoff aus dem Speicher irgendwelche geeignete Mittel einzusetzen, eignet sich dazu vorteilhaft eine pneumatische Förderanlage. Da Wärmedämmmaterialien in der Regel ein geringes spezifisches Gewicht aufweisen, eignen sie sich speziell gut für eine pneumatische Förderung.

Die pneumatische Förderanlage weist vorteilhaft einen Kreislauf auf. Dies ermöglicht einen besonders einfachen und betriebssicheren Aufbau der Förderanlage. Von besonderem Vorteil ist ein geschlossener Kreislauf, weil dann keine Vereisungsprobleme auftreten können. Wenn nämlich das Fördermedium, in der Regel Luft, Wasser aufnehmen kann, so kann sich dieses an den Scheiben kondensieren. In einem geschlossenen Kreislauf kann trockene Luft als Fördermedium verwendet werden, so dass keine Vereisungsprobleme auftreten.

Der Kreislauf kann einen Transportventilator enthalten, dessen Ausgang über eine Zuluftleitung mit dem Hohlraum verbunden ist, der seinerseits über eine Siebklappe und eine Rücklaufleitung mit dem Speicher verbunden ist, welcher über eine Klappe mit dem Eingang des Ventilators verbunden ist. Auf diese Weise ist es möglich, den körnigen Füllstoff mit dem Ventilator in den gewünschten Hohlraum zu blasen, der sich dann auffüllt, weil der Füllstoff an der Siebklappe zurückgehalten wird und lediglich die als Fördermedium wirkende Luft in den Speicher zurückkehrt.

Die Klappe am Eingang des Ventilators kann eine Siebklappe sein. In diesem Falle kann bei einem geschlossenen Kreislauf immer noch Luft aus dem Speicher durch die Siebklappe hindurch in den Ventilator strömen , wenn der Ventilator dazu benützt wird, das Füllmaterial aus dem Hohlraum des Bauelements in den Speicher zu fördern. Ist jedoch der Speicher ziemlich voll, so entstehen beim Durchtritt der Luft durch den Füllstoff relativ grosse Druckverluste. Um dies zu vermeiden kann der Speicheroberteil über ein Sieb und eine zweite Klappe an den Eingang des Transportventilators anschliessbar sein. In diesem Falle muss die Luft auf dem Weg durch den Speicher nicht durch das dort enthaltene Füllmaterial strömen, so dass entsprechende Druckverluste vermieden werden. Die zweite Klappe ist nur offen, wenn der Hohlraum im Bauelement geleert
wird.

In der Praxis erweist es sich als vorteilhaft, eine Vorrichtung
zum Entleeren der Zuluftleitung vorzusehen. Dadurch wird vermieden, dass eine kompakte Füllstoffmenge in den Transportventilator gelangt und diesen an seiner Funktion verhindert.

Die Vorrichtung zur Entleerung der Zuluftleitung kann eine
Zuluftklappe in der Zuluftleitung aufweisen, sowie eine
erste Bypassleitung, welche nach der Zuluftklappe über eine
erste Bypassklappe zum Eingang des Transportventilators führt,
und eine zweite Bypassleitung, die vom Ausgang des Transportventilators zum Speicher führt. Diese Anordnung ermöglicht
eine leichte Entleerung der Zuluftleitung.

An der Zuluftleitung können mehrere Klappen vorgesehen sein,
mit welchen einzelne Bauelemente oder Gruppen von Bauelementen
an die Zuluftleitung anschliessbar sind. Durch Betätigung
dieser Klappen ist es möglich, nur einzelne oder Gruppen von
Bauelementen mit Füllstoff zu füllen. So kann beispielsweise
nur eine Dachhälfte des Gewächshauses gefüllt werden, so dass
durch die andere Dachhälfte das Licht frei  eintreten kann.

Vorteilhaft sind einzelne Bauelemente oder Gruppen von Bauelementen über Absperrschieber an die Rückluftleitung anschliessbar. Durch die Betätigung von Absperrschiebern kann der Fluss
des Fördermediums durch bereits gefüllte Bauelemente verhindert
werden, so dass die Förderung des Füllstoffes in die anderen
Bauelemente verbessert wird.

Im Kreislauf kann eine Heizeinrichtung vorgesehen sein. Eine
solche Heizeinrichtung ermöglicht es, das Fördermedium zu erwärmen, um eine Eisbildung zu vermeiden oder rückgängig zu
machen.

Da der Füllstoff der Wärmedämmung dienen soll, besteht er vorteilhaft aus einem Wärmedämmmaterial, z.B. einem Schaumkunststoff. Es wäre aber auch möglich, dass der Füllstoff in erster Linie ein Lichtdämmmaterial ist. Dieses Lichtdämmmaterial könnte auch ganz bestimmte Wellenlängen absorbieren, z.B. die Infrarotstrahlung, so dass sichtbares Licht vorhanden ist, jedoch die Wärmestrahlung weitgehend fehlt.

Je nach der Art der Förderung kann sich die Korngrösse des Füllstoffes in einem Bereich bewegen, der von der Pulverform bis zur Grobkörnigkeit reicht. Eine gewisse Körnung ist notwendig, wenn die Fördereinrichtung Siebe oder Siebklappen enthält. Als besonders vorteilhaft erweist sich ein Füllstoff mit einem Durchmesser in der Grössenordnung von zwei bis zehn Millimeter. In diesem Bereich hat der Füllstoff eine gute Wärmedämmwirkung, ermöglicht aber dennoch den Durchtritt des Fördermediums, wie es zur Förderung notwendig ist.

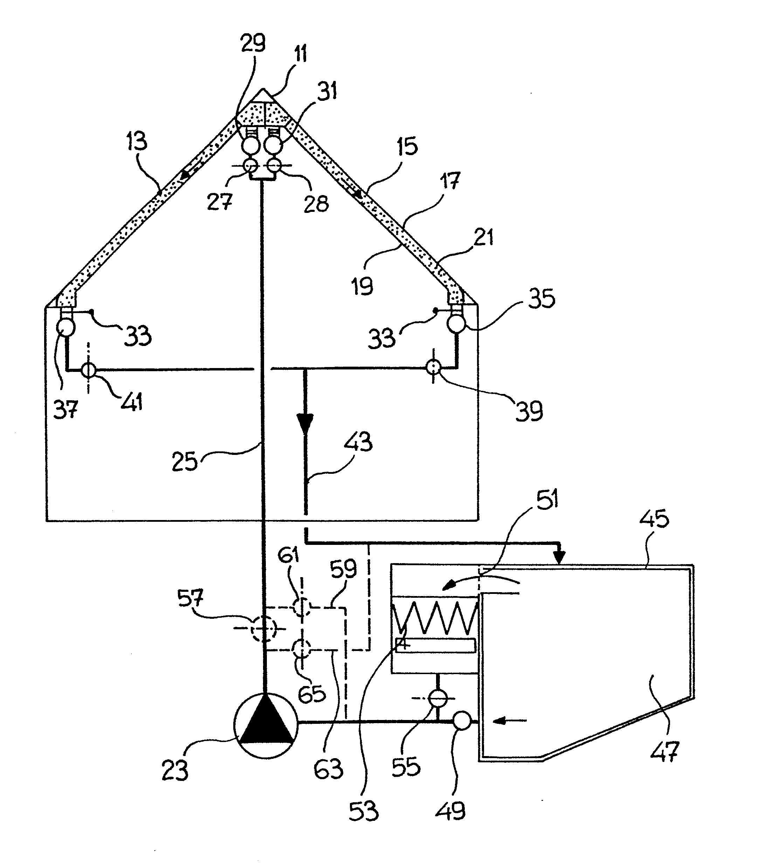

Ein Ausführungsbeispiel der Erfindung wird nun unter Bezugnahme auf die Zeichnung beschrieben.

Die Zeichnung zeigt in schematischer Weise ein Gewächshaus,, bei welchem die erfindungsgemässe Einrichtung Anwendung findet. Das gezeigte Gewächshaus besitzt ein Satteldach, dessen Dachhälften 13 und 15 doppelverglast sind. Je zwei Scheiben 17 und 19, die sich üblicherweise zwischen nicht dargestellten Sprossen befinden und einen Hohlraum 21 umschliessen, können somit als Bauelement für das Dach betrachtet werden. Selbstverständlich ist es möglich, dass auch mehrere Glas- oder Kunststoffplatten einen Hohlraum 21 umschliessen. Wichtig ist lediglich, dass dieser Hohlraum mit einem körnigen Füllstoff gefüllt und bei Bedarf wieder entleert werden kann. Beim gezeigten Ausführungsbeispiel erfolgt die Füllung und Leerung mittels einer pneumatischen Förderanlage. Es wäre aber auch möglich, diese Füllung und Leerung mit anderen Mitteln vorzunehmen, beispielsweise durch Schwerkraft, wobei dann der Füllstoff wieder durch mechanische Mittel in die Höhe gefördert wird. Eine pneumatische Förderung ermöglicht jedoch eine Automatisierung mit einfachen Mitteln. Bei der gezeigten pneumatischen Förderanlage ist ein geschlossener Kreislauf vorgesehen. Dieser Kreislauf enthält einen Transportventilator 23, dessen Ausgang über eine Zuluftleitung 25 zu zwei Motorklappen 27 und 28 führt. Von dort bedient je eine Zweigleitung 29, 31 je eine Dachhälfte 13, 15. Diese Zweigleitungen 29, 31, die als Teil des Zuluftsystems zu betrachten sind, sind mit den Hohlräumen 21 der einzelnen Bauelemente verbunden.

Wenn es sich auch bei diesen Bauelementen um Doppelverglasungsfenster handelt, so ist die Erfindung doch nicht auf solche Doppelverglasungsfenster begrenzt. So könnte beispielsweise der Hohlraum 21 statt durch Glasscheiben 17, 19 auch beispielsweise durch Blech umschlossen sein. Auch bei einem solchen Element kann die Wärmedämmung durch Füllen und Entleeren mit Füllstoff verändert werden. Ein solches Element könnte dann z.B. als Fassadenelement dienen.

Der Hohlraum 21 ist an seinem unteren Ende über einen Absperrschieber 33 mit einer Zweigleitung 35 bzw. 37 verbunden, in welcher sich eine Siebklappe 39 bzw. 41 befindet. Die beiden Zweigleitungen 35, 37 vereinigen sich zur Rückluftleitung 43, die zum Speicher 45 für den Füllstoff 47 führt. Der Unterteil des Speichers 45 ist über eine Klappe 49 mit dem Eingang des Ventilators 23 verbunden. Die Klappe 49 kann eine Siebklappe sein. Es ist jedoch zweckmässiger, die Klappe 49 nicht als Siebklappe auszubilden, jedoch ein Sieb 51 am oberen Teil des Speichers 45 vorzusehen, wobei dann Luft aus dem Speicher 45 durch das Sieb 51, eine Heizeinrichtung 53 und eine Klappe 55 zum Eingang des Transportventilators 23 strömen kann. Dieser Fluss findet lediglich beim Leeren der Bauelemente statt, wenn die Klappe 49 geschlossen und die Klappe 55 geöffnet sind.

Zum Betrieb der beschriebenen Einrichtung wurden als Füllstoff weisse Schaumkunststoffkugeln verwendet, die unter der Materialbezeichnung Styropor im Handel sind. Dieser Schaumkunststoff besitzt eine gewisse Lichtdurchlässigkeit, so dass das Gewächshaus auch nach Füllung der beiden Dachhälften 13, 15 nicht völlig abgedunkelt ist. Da die Styroporkugeln mit einem Durchmesser von ca. 5 mm ziemlich leicht sind, eignen sie sich besonders gut zur pneumatischen Förderung. Der Durchmesser der Kugeln kann jedoch auch kleiner oder grösser gewählt werden, etwa im Bereich von 2 bis 10 mm. Möglich wäre auch die Verwendung von Kugeln oder Blasen aus anderem Material, z.B. einem Kunststoff, der gewisse Wellenlängen des Tageslichtes absorbiert. Es sind bereits von der Firma 3M hergestellte Folien aus solchem Kunststoff bekannt. Die Verwendung von Blasen oder Kugeln aus solchem Kunststoff würde es erlauben, ohne grossen Helligkeitsverlust im Sommer die Wärmestrahlung des Sonnenlichts zu absorbieren. Wenn für Sommer und Winter Füllmaterialien mit verschiedenen Eigenschaften verlangt werden, so ist es auch möglich, die Einrichtung so auszubilden, dass der Kreislauf an mehrere Speicher 45 mit verschiedenen Füllmaterialien anschliessbar ist.

Um Füllmaterial aus der Zuluftleitung 25 zu entleeren ist eine Vorrichtung vorgesehen, die eine Zuluftklappe 57 in der Zuluftleitung 25 aufweist, sowie eine Bypassleitung 59, welche nach der Zuluftklappe 57 über eine erste Bypassklappe 61 zum Eingang des Transportventilators 23 führt. Eine zweite Bypassleitung 63 führt über eine zweite Bypassklappe 65 vom Ausgang des Transportventilators zum Speicher 45.

Es soll nun das Füllen eines oder mehrerer Hohlräume 21 auf der Dachseite 15 betrachtet werden. Zu diesem Zwecke sind die Absperrschieber 33 der zu füllenden Bauelemente geöffnet. Die Siebklappen 39 und 41 sind geschlossen. Geöffnet sind jedoch die Klappen 49 und 57.

Wenn somit der Transportventilator 23 in Betrieb gesetzt wird, so wird Füllmaterial aus dem Speicher 45 zusammen mit Luft durch die geöffnete Klappe 49 zum Transportventilator 23 gesogen. Der Transportventilator 23 fördert Luft und Füllmaterial durch die geöffnete Klappe 57, die Zuluftleitung 25, die Motorklappe 28 und die Zweigleitung in den Hohlraum 21 und die Zweigleitung 35. Da die Siebklappe geschlossen ist, kann lediglich die Luft durch die Siebklappe strömen, nicht aber das Füllmaterial. Dieses füllt zuerst die Zweigleitung 35 und staut sich dann immer mehr im Hohlraum 21 an, bis dieser bis oben voll ist. Es kann dann der Transportventilator abgestellt werden. Sind jedoch noch andere Bauelemente zu füllen, so wird der Absperrschieber 33 des gefüllten Bauelementes geschlossen und der des zu füllenden Bauelementes geöffnet. Luft mit Füllstoff kann dann in dieses Bauelement strömen und auch dieses füllen. In solcher Weise kann ein Bauelement nach dem andern oder eine Gruppe von Bauelementen nach der andern gefüllt werden, bis die ganze Dachhälfte gefüllt ist. Wird auch noch die Füllung der anderen Dachhälfte verlangt, so kann dort nach dem Schliessen der Motorklappe 28 und dem Oeffnen der Motorklappe 27 analog verfahren werden.

Zum Entleeren der Bauelemente werden die Motorklappen 27 und 28, die Absperrschieber 33, die Siebklappen 39, 41 und die Klappe 55 geöffnet. Damit kein Füllmaterial aus dem Speicher zum Ventilator gelangt, wird dagegen die Klappe 49 geschlossen.

Wenn nun der Ventilator läuft, so zieht er Luft aus dem Speicher 45 durch die Klappe 55. Diese Luft gelangt über die geöffnete Klappe 55 in die Zuluftleitung 25 und von dort durch die Motorklappen 27, 28 in die Hohlräume 21. Da die Absperrschieber 33 und die Siebklappen geöffnet sind, kann Luft zusammen mit Füllmaterial durch die Rückluftleitung zum Speicher 45 strömen. Natürlich ist es möglich, durch entsprechende Betätigung der Absperrschieber auch nur einzelne Bauelemente oder Gruppen von Bauelementen zu leeren.

Unter bestimmten Betriebsumständen kann die Zuluftleitung mit Füllmaterial gefüllt werden, wobei dann der Transportventilator zu stark belastet wird und dann automatisch abstellt. Zum Entleeren des Füllrohrs wird dann die Klappe 57 geschlossen und die Klappen 61 und 65 geöffnet. Ebenfalls geschlossen werden die Klappen 55 und 49. Es wird dann der Füllstoff aus dem Füllrohr 25 über die Bypassleitung 59 in den Ventilator und die Bypassleitung 63 in den Tank 45 gefördert. Nach dem entsprechenden Umstellen der Klappen, ist dann die Anlage wieder betriebsbereit.

Patentansprüche

1. Einrichtung zur Veränderung der Wärme- und/oder Lichtdämmung bei Bauten, insbesondere Gewächshäusern, bei welchen
Bauten mindestens ein Teil der Bauelemente, z.B. mehrfachverglaste Scheiben, einen Hohlraum aufweisen, dadurch gekennzeichnet, dass Mittel vorgesehen sind, um einen körnigen
Füllstoff aus einem Speicher (45) in den Hohlraum (21) des
jeweiligen Bauelementes einzubringen bzw. aus diesem wieder
in den Speicher (45) zurückzuführen.

2. Einrichtung nach Anspruch 1, dadurch gekennzeichnet, dass
die genannten Mittel durch eine pneumatische Förderanlage
gebildet werden.

3. Einrichtung nach Anspruch 2, dadurch gekennzeichnet, dass
die pneumatische Förderanlage einen Kreislauf aufweist.

4. Einrichtung nach Anspruch 3, dadurch gekennzeichnet, dass
der Kreislauf ein geschlossener Kreislauf ist.

5. Einrichtung nach Anspruch 3 oder 4, dadurch gekennzeichnet,
dass der Kreislauf einen Transportventilator (23) enthält,
dessen Ausgang über eine Zuluftleitung (25) mit dem Hohlraum (21) verbunden ist, der seinerseits über eine Siebklappe
(39) und eine Rückluftleitung (43) mit dem Speicher (45) verbunden ist, welcher über eine Klappe (49) mit dem Eingang des
Ventilators (23) verbunden ist.

6. Einrichtung nach Anspruch 5, dadurch gekennzeichnet, dass
die Klappe (49) eine Siebklappe ist.

7. Einrichtung nach Anspruch 5, dadurch gekennzeichnet, dass der Speicheroberteil über ein Sieb (51) und eine zweite Klappe (55) an den Eingang des Transportventilators (23) anschliessbar ist.

8. Einrichtung nach einem der Ansprüche 1 bis 7, dadurch gekennzeichnet, dass eine Vorrichtung zum Entleeren der Zuluftleitung (25) vorgesehen ist.

9. Einrichtung nach Anspruch 8, dadurch gekennzeichnet, dass die Vorrichtung zur Entleerung der Zuluftleitung (25) eine Zuluftklappe (57) in der Zuluftleitung (25) aufweist, sowie eine erste Bypassleitung (59), welche nach der Zuluftklappe (57) über eine erste Bypassklappe (61) zum Eingang des Transportventilators (23) führt, und eine zweite Bypassleitung (63), die über eine zweite Bypassklappe (65) vom Ausgang des Transportventilators (23) zum Speicher (45) führt.

10. Einrichtung nach einem der Ansprüche 4 bis 9, dadurch gekennzeichnet, dass an der Zuluftleitung (25) mehrere Klappen (27, 28) vorgesehen sind, mit welchen einzelne Bauelemente oder Gruppen von Bauelementen an die Zuluftleitung (25) anschliessbar sind.

11. Einrichtung nach einem der Ansprüche 4 bis 11, dadurch gekennzeichnet, dass die einzelnen Bauelemente oder Gruppen von Bauelementen über Absperrschieber (33) an die Rückluftleitung (43) anschliessbar sind.

12. Einrichtung nach einem der Ansprüche 4 bis 11, dadurch gekennzeichnet, dass im Kreislauf eine Heizeinrichtung (53) vorgesehen ist.

13. Einrichtung nach einem der Ansprüche 1 bis 12, dadurch gekennzeichnet, dass der Füllstoff ein Wärmedämmmaterial ist.

14. Einrichtung nach einem der Ansprüche 1 bis 12, dadurch gekennzeichnet, dass der Füllstoff ein Lichtdämmmaterial ist.

15. Einrichtung nach einem der Ansprüche 1 bis 14, dadurch gekennzeichnet, dass der Füllstoff einen Durchmesser in der Grössenordnung von 2 bis 10 mm aufweist.

16. Einrichtung nach einem der Ansprüche 1 bis 15, dadurch gekennzeichnet, dass der Kreislauf an mehrere Speicher mit verschiedenen Füllmaterialien anschliessbar ist.

Europäisches
Patentamt

EUROPÄISCHER RECHERCHENBERICHT

0072519

Nummer der Anmeldung

EP 82 10 7191.7

| Kategorie | Kennzeichnung des Dokuments mit Angabe, soweit erforderlich, der maßgeblichen Teile | betrifft Anspruch | KLASSIFIKATION DER ANMELDUNG (Int. Cl.¹) |
|---|---|---|---|
| | EINSCHLÄGIGE DOKUMENTE | | |
| X | EP - A1 - 0 003 417 (M. DUBE) | 1-4 | A 01 G 9/22 |
| | * Ansprüche 1, 4, 5 bis 9 ; Seite 1, | 11,13, | |
| | Zeile 15 bis Seite 5, Zeile 13 ; | 14 | |
| | Seite 7, Zeile 4 bis Seite 12, | | |
| A | Zeile 7 ; Fig. 1 * | 5,7 | |
| | -- | | |
| A | EP - A1 - 0 013 080 (IMPERIAL CHEMICAL INDUSTRIES LTD.) | 1,2,13 | |
| | * Ansprüche 1, 3 ; Seite 3, Zeile 14 bis Seite 5, Zeile 24 ; Fig. 2 * | | RECHERCHIERTE SACHGEBIETE (Int. Cl.³) |
| | -- | | |
| P,X | US - A - 4 305 235 (W. ROSTON) | 1-4, | A 01 G 9/00 |
| | * Ansprüche 1, 3, 7 ; Spalte 2, | 13 | E 04 H 5/08 |
| | Zeilen 16 bis 57 ; Spalte 3, Zeile | | E 06 B 3/66 |
| | 65 bis Spalte 5, Zeile 65 ; | | |
| P,A | Fig. 2, 9 * | 5,8 | |
| | ---- | | |

X Der vorliegende Recherchenbericht wurde für alle Patentansprüche erstellt.

| Recherchenort | Abschlußdatum der Recherche | Prüfer |
|---|---|---|
| Berlin | 28-10-1982 | BERGZOLL |

EPA form 1503.1   06.78